# EUROPÄISCHE PATENTSCHRIFT

(11) **EP 3 656 950 B1**
(45) Veröffentlichungstag und Bekanntmachung des Hinweises auf die Patenterteilung: **27.03.2024**
(21) Anmeldenummer: 19210493.3
(22) Anmeldetag: 21.11.2019
(51) Int. Cl.: F16B 7/10, E04G 25/06, F16B 21/12

(54) **VERRIEGELUNGSBOLZEN UND TELESKOPIERBARE STÜTZE**
LOCKING PIN AND TELESCOPIC SUPPORT
DOIGT DE VERROUILLAGE ET SUPPORT TÉLESCOPIQUE

(30) Priorität: 21.11.2018 US 201816198325; 26.03.2019 DE 202019101724 U
(43) Veröffentlichungstag der Anmeldung: 27.05.2020
(73) Patentinhaber: DOKA GmbH, 3300 Amstetten (AT)
(72) Erfinder: HOCHGATTERER, Thomas, 3300 Amstetten (AT)
(74) Vertreter: SONN Patentanwälte GmbH & Co KG

(56) Entgegenhaltungen:
- DE-A1- 2 758 170
- DE-C1- 3 613 707
- GB-A- 1 389 507

## Beschreibung

### GEBIET DER OFFENBARUNG

Die Erfindung betrifft teleskopierbare Stützen, insbesondere zur Abstützung von Schalungen, sowie Verriegelungsbolzen zur Befestigung solcher teleskopierbaren Stützen in einer vorgegebenen Länge.

### BESCHREIBUNG DES STANDES DER TECHNIK UND AUFGABE DER VORLIEGENDEN OFFENBARUNG

Im Stand der Technik ist das Bereitstellen einer teleskopierbaren Stütze mit einem Verriegelungsbolzen zum Sichern eines oberen Elements der teleskopierbaren Stütze gegenüber einer axialen Bewegung bezüglich eines unteren Elements der teleskopierbaren Stütze gut bekannt. Bei einer üblicherweise verwendeten Gestaltung solcher Verriegelungsbolzen, siehe zum Beispiel FR 1 356 174, kann der Bolzen horizontal aus einer verriegelten Position in eine entriegelte Position bewegt werden. In der verriegelten Position erstreckt sich ein linearer Abschnitt des Bolzens durch ein Paar Löcher im oberen Element. Der Bolzen hat ferner eine U-förmige Biegung, die der äußeren Form des unteren Elements entspricht. In der entriegelten Position liegt die U-förmige Biegung an dem unteren Element an. Auf diese Weise kann der Bolzen nicht von der Stütze herunterfallen, wenn der Bolzen entriegelt ist.

Es ist jedoch ein Nachteil dieser Gestaltung, dass der Verriegelungsbolzen versehentlich in die entriegelte Position verschoben werden kann, was zu einem unbeabsichtigten Einfahren des oberen Elements in das untere Element der Stütze führen würde. Dies kann auf verschiedene Weise, einschließlich Sicherheitsbedenken, nachteilig sein.

Andererseits offenbart die GB 1,148,656 eine einfachere Gestaltung für einen Verriegelungsbolzen zum Verwenden bei einer teleskopierbaren Stütze. In diesem Stand der Technik hat der Bolzen einen linearen Abschnitt, der in zwei gegenüberliegende Öffnungen der Stütze eingesetzt ist, und Mittel zum Halten des Bolzens in Position. Zu diesem Zweck ist das hintere Ende des Verriegelungsbolzens mit einem Haltebügel vorgesehen, der aus einem Stück federnden Draht gebildet ist. Der Haltebügel hat einen U-förmigen Abschnitt, wobei sich ein Schenkel durch ein Loch im Bolzenschaft erstreckt. Wenn der Verriegelungsbolzen in ein Paar diametral gegenüberliegender Durchgangslöcher in dem Innenrohr eingesetzt wird, wird der Haltebügel nach außen weggebogen, um dem Haltebügel das Laufen über die Außenseite des Außenrohrs zu ermöglichen. In der verriegelten Position kann der Bolzen nur gegen die Kraft des flexiblen Haltebügels zurückgezogen werden. Der Verriegelungsbolzen wird jedoch nicht daran gehindert, von der teleskopierbaren Stütze getrennt zu werden.

Weitere Verriegelungsbolzen und Schalungsstützen sind aus GB 1 389 507 A, DE 36 13 707 C1 und DE 27 58 170 A1 bekannt.

Es ist somit eine Aufgabe der Erfindung, mindestens einige der mit dem Stand der Technik verbundenen Nachteile zu verringern.

### KURZDARSTELLUNG DER VORLIEGENDEN OFFENBARUNG

Diese Aufgabe wird durch einen Verriegelungsbolzen gemäß Anspruch 10 und eine Stütze gemäß Anspruch 1 gelöst.

In einer Ausführungsform weist die teleskopierbare Stütze Folgendes auf:
- einen Schenkel mit einem unteren Schenkelteil und einem oberen Schenkelteil, wobei der obere Schenkelteil mehrere vertikal beabstandete Durchgangslöcher aufweist,
- einen Verriegelungsbolzen aufweisend einen Bolzen, der lösbar mit einem der vertikal beabstandeten Durchgangslöcher des oberen Schenkelteils verbunden ist, und
- eine Kappe, die mit dem Verriegelungsbolzen verbunden ist, wobei die Kappe eine Befestigungshülse aufweist, die über ein Ende des Verriegelungsbolzens gestülpt ist, wobei die Kappe ferner eine Feder zum Betätigen durch die Außenseite des unteren Schenkelteils aufweist.

Um eine teleskopische Bewegung der Stütze zu ermöglichen, wird der Verriegelungsbolzen horizontal aus einer verriegelten Position in eine entriegelte Position bewegt. In der entriegelten Position ist der Verriegelungsabschnitt des Verriegelungsbolzens von dem Durchgangsloch der Stütze gelöst. Die am Verriegelungsbolzen bereitgestellte Feder ist so angeordnet, dass die Entriegelung des Verriegelungsbolzens die Überwindung einer von der Feder bereitgestellten Federkraft erfordert. Zu diesem Zweck wird die Feder von der Außenseite des unteren Schenkelteils in Eingriff gebracht, sodass sich die Feder elastisch nach außen biegt, wenn der Verriegelungsbolzen quer in die entriegelte Position bewegt wird. Diese Ausführung hilft beim Verhindern einer versehentlichen teleskopischen Bewegung der Stütze, die aus einer unbeabsichtigten Überführung des Verriegelungsbolzens in die entriegelte Position folgen würde. Diese Ausführungsform ist besonders günstig, da vorhandene Gestaltungen von Verriegelungsbolzen durch Hinzufügen der Kappe mit der Feder leicht nachgerüstet werden können. Zu diesem Zweck wird die Kappe über das äußere Ende des Verriegelungsbolzens geschoben. Das gegenüberliegende innere Ende des Verriegelungsbolzens ist durch einen linearen Verriegelungsabschnitt gebildet, der sich durch eines der vertikal beabstandeten Durchgangslöcher erstreckt, die typischerweise als Paare diametral gegenüberliegender Durchgangslöcher bereitgestellt sind. Die Kappe kann nach Bedarf fest oder lösbar mit dem äußeren Ende des Verriegelungsbolzens verbunden sein.

Zum Zweck dieser Offenbarung sind alle Richtungen und Positionen, wie "nach oben", "nach unten", "oben", "unten", "vertikal", "horizontal", in Bezug auf eine beabsichtigte Verwendung der teleskopierbaren Stütze in einer aufrechten (vertikalen) Position angegeben. Es ist jedoch möglich, die teleskopierbare Stütze auf unterschiedliche Weise zu verwenden, zum Beispiel in einer geneigten oder umgedrehten Position, wobei die Richtungen und Positionen entsprechend zu verschieben sind.

Bei einer Ausführungsform hat die Befestigungshülse eine Einführöffnung an dem einen Ende und eine Vorderwand an dem anderen Ende. Vorzugsweise entspricht ein Innendurchmesser der Befestigungshülse dem Außendurchmesser des äußeren Endes des Verriegelungsbolzens. Die Vorderwand begrenzt das Ausmaß, in dem die Kappe über das äußere Ende des Verriegelungsbolzens geschoben wird.

In einer Ausführungsform ist die Kappe aus einem Kunststoffwerkstoff hergestellt und der Verriegelungsbolzen aus einem Metallwerkstoff hergestellt. Somit wird die erforderliche Stabilität durch den Metallwerkstoff des Verriegelungsbolzens bereitgestellt, während die Kappe mit der Feder einfach aus einem Kunststoffwerkstoff hergestellt sein kann.

Bei einer Ausführungsform steht die Feder frei von einer äußeren Seite der Befestigungshülse der Kappe vor. Bei dieser Ausführungsform kann sich die Feder von einer zylinderförmigen Außenfläche der Befestigungshülse weg erstrecken (d. h. nicht von der ebenen Vorderwand der Befestigungshülse).

In einer Ausführungsform ist die Feder eine Flachfeder. Diese Ausführung ermöglicht eine leichte elastische Auslenkung der Feder, wenn die Feder beim Entriegeln des Verriegelungsbolzens von der Außenseite des unteren Schenkelteils in Eingriff gebracht wird.

In einer Ausführungsform hat die Feder einen gekrümmten Anlagebereich zum Anliegen an dem Schenkel. Dieses Merkmal hilft, ein Verklemmen des Verriegelungsbolzens beim Entriegeln der Stütze zu verhindern.

In einer Ausführungsform ist der gekrümmte Anlagebereich der Kappe zylinderförmig. Bei dieser Ausführungsform ist der gekrümmte Anlagebereich in nur eine Richtung gekrümmt.

In einer anderen Ausführungsform ist der gekrümmte Anlagebereich der Kappe in zwei orthogonale Richtungen gekrümmt. Bei dieser Ausführungsform kann der gekrümmte Anlagebereich kugelförmig sein.

Bei einer Ausführungsform hat die Feder einen Ausschnitt. Diese Ausführungsform erleichtert die Auslenkung der Feder beim Entriegeln der Stütze.

Bei einer Ausführungsform erstreckt sich der Ausschnitt zwischen zwei Flanschen, die mit diametral gegenüberliegenden Seiten der Befestigungshülse verbunden sind. Diese Ausführung stellt eine zuverlässige Verbindung zwischen der Feder und der Befestigungshülse bereit.

Bei einer Ausführungsform erstreckt sich der Ausschnitt von einem freien Ende der Feder nach innen.

Bei einer Ausführungsform ist der Ausschnitt rechtwinklig.

Bei einer anderen Ausführungsform ist die Feder mit einer Vorderwand der Befestigungshülse verbunden. Bei dieser Ausführungsform kann die Feder ein ringförmiges Element haben. Ferner kann in dieser Ausführungsform eine Mittelachse des ringförmigen Elements der Feder kollinear mit einer Mittelachse der Befestigungshülse sein. Ferner kann bei einer Ausführungsform ein Biegeabschnitt das ringförmige Element mit der Befestigungshülse verbinden. Somit kann das ringförmige Element im Wesentlichen starr sein, während die für die Entriegelung der Stütze erforderliche Auslenkung durch den Biegeabschnitt, der das ringförmige Element mit der Befestigungshülse verbindet, bereitgestellt wird.

Bei einer Ausführungsform weist ein Verriegelungsbolzen zum Sichern eines oberen Schenkelteils an einem unteren Schenkelteil einer teleskopierbaren Stütze Folgendes auf:
- einen Bolzen zur Verbindung mit einem Durchgangsloch der teleskopierbaren Stütze und
- eine Kappe, die mit dem Bolzen verbunden ist, wobei die Kappe eine Befestigungshülse hat, die über ein Ende des Bolzens gestülpt ist, wobei die Kappe ferner eine Feder zum Anliegen an dem Schenkel aufweist.

Bei einer Ausführungsform weist der Verrieglungsbolzen Folgendes auf:
- einen ersten linearen Abschnitt zum Verbinden mit einem Durchgangsloch der Stütze;
- einen zweiten und einen dritten linearen Abschnitt, die sich parallel zu dem ersten linearen Abschnitt an diametral gegenüberliegenden Seiten der teleskopierbaren Stütze erstrecken;
- einen ersten gekrümmten Abschnitt, der den ersten linearen Abschnitt mit dem zweiten linearen Abschnitt verbindet; und
- einen zweiten gekrümmten Abschnitt, der den zweiten linearen Abschnitt mit dem dritten linearen Abschnitt verbindet, wobei der dritte lineare Abschnitt die Kappe trägt.

Bei dieser Ausführungsform ist der zweite gekrümmte Abschnitt in einem Abstand von dem Schenkel in einer verriegelten Position angeordnet, während der zweite gekrümmte Abschnitt beim Entriegeln an dem Schenkel anschlägt, zum Beispiel, wenn der Verriegelungsbolzen mit Hilfe eines Instruments quer zur Stütze bewegt wird.

Im Folgenden wird eine nicht erfindungsgemäße Ausführungsform einer teleskopierbaren Stütze näher beschrieben.

Bei einer weiteren Ausführungsform weist die teleskopierbare Stütze Folgendes auf:
- einen Schenkel mit einem unteren Schenkelteil und einem oberen Schenkelteil, wobei der obere Schenkelteil mehrere vertikal beabstandete Durchgangslöcher hat, und
- einen Verriegelungsbolzen zum Sichern des oberen Schenkelteils gegen axiale Bewegung bezüglich des unteren Schenkelteils, wobei der Verriegelungsbolzen einen ersten Verriegelungsabschnitt zum Einsetzen in eines der mehreren vertikal beabstandeten Durchgangslöcher des oberen Schenkelteils hat, wobei der Verriegelungsbolzen ferner einen gekrümmten Halteabschnitt mit einem Innendurchmesser hat, der einem Außendurchmesser des unteren Schenkelteils entspricht, wobei der Verriegelungsbolzen ferner einen Federabschnitt, der an den gekrümmten Halteabschnitt angrenzt, hat, wobei der Federabschnitt durch eine Außenseite des unteren Schenkelteils in Eingriff gebracht wird, wenn der Verriegelungsbolzen von einer verriegelten Position in eine entriegelte Position bewegt wird.

Diese Ausführungsform ist besonders vorteilhaft, da der gekrümmte Halteabschnitt eine Trennung des Verriegelungsbolzens von dem Schenkel verhindert, da der gekrümmte Halteabschnitt mit der Außenseite des unteren Schenkelteils zum Anliegen kommt, wenn der Verriegelungsbolzen aus der verriegelten in die entriegelte Position bewegt wird. Andererseits stellt der Federabschnitt am äußeren Ende des Verriegelungsbolzens eine Federkraft bereit, die für die horizontale Bewegung des Verriegelungsbolzens aus der verriegelten in die entriegelte Position überwunden werden muss, wodurch ein versehentliches Entriegeln der Stütze und somit ein unbeabsichtigter Zusammensturz der Stütze vermieden wird.

Zur Feineinstellung der vertikalen Position des unteren Schenkelteils ist es günstig, wenn eine drehbare Manschette an einer Gewindeaußenseite des unteren Schenkelteils angeordnet ist, wobei der erste lineare Abschnitt des Verriegelungsbolzens in der verriegelten Position auf einer oberen Seite der drehbaren Manschette ruht.

Gemäß einer bevorzugten Ausführungsform ist die Feder an einem freien Ende eines dritten linearen Abschnitts angeordnet, wobei der dritte lineare Abschnitt an den gekrümmten Halteabschnitt anschließt.

Gemäß einer besonders bevorzugten Ausführungsform weist die Feder ein konvex gekrümmtes Plattenteil auf. Dadurch ist eine einfache und kostengünstige Fertigung der Feder möglich.

Zur federbelasteten Anlage des Verriegelungsbolzens an dem unteren Schenkel ist es günstig, wenn die Feder eine Einbuchtung aufweist, wobei die Einbuchtung im Wesentlichen denselben Radius wie die Außenseite des unteren Schenkelteils aufweist.

Gemäß einer bevorzugten Ausführungsform erstreckt sich die Feder im Wesentlichen in Richtung der gedachten Verlängerung des dritten linearen Abschnitts weg vom freien Ende des dritten linearen Abschnitts.

Gemäß einer weiteren bevorzugten Ausführungsform erstreckt sich die Feder vom freien Ende des dritten linearen Abschnitts im Wesentlichen entlang des dritten linearen Abschnitts in Richtung des gekrümmten Halteabschnitts. Vorteilhafterweise ist die Feder an einer dem unteren Schenkel zugewandten Seite des dritten linearen Abschnitts angeordnet.

Zur einfachen Montage der Feder an dem dritten linearen Abschnitt ist es günstig, wenn die Feder an einem ersten Ende der Feder in eine korrespondierende Ausnehmung eines ersten Endes des dritten linearen Abschnitts aufgenommen wird.

Weiters ist es günstig, wenn die Feder mithilfe eines Stiftes, der durch eine Bohrung an dem ersten Ende der Feder und durch eine weitere Bohrung an dem ersten Ende des dritten linearen Abschnitts geführt ist, an dem dritten linearen Abschnitt befestigt ist.

### KURZBESCHREIBUNG DER ZEICHNUNGEN

Andere Aufgaben und Merkmale der vorliegenden Offenbarung werden aus der folgenden, ausführlichen Beschreibung, die im Zusammenhang mit den beigefügten Zeichnungen betrachtet wird, ersichtlich. Es versteht sich jedoch, dass die Zeichnungen nur als eine Darstellung gestaltet sind und nicht als eine Definition der Beschränkungen der vorliegenden Offenbarung.
Fig. 1A ist eine Ansicht einer ineinanderschiebbaren, teleskopierbaren Stütze mit einem oberen Schenkel, der mittels eines Verriegelungsbolzens an einem unteren Schenkel gesichert ist, wobei der Verriegelungsbolzen in einer verriegelten Position gezeigt ist, die sich vollständig durch zwei diametral gegenüberliegende Durchgangslöcher des oberen Schenkels erstreckt.
Fig. 1B ist eine Detailansicht der teleskopierbaren Stütze von Figur 1A.

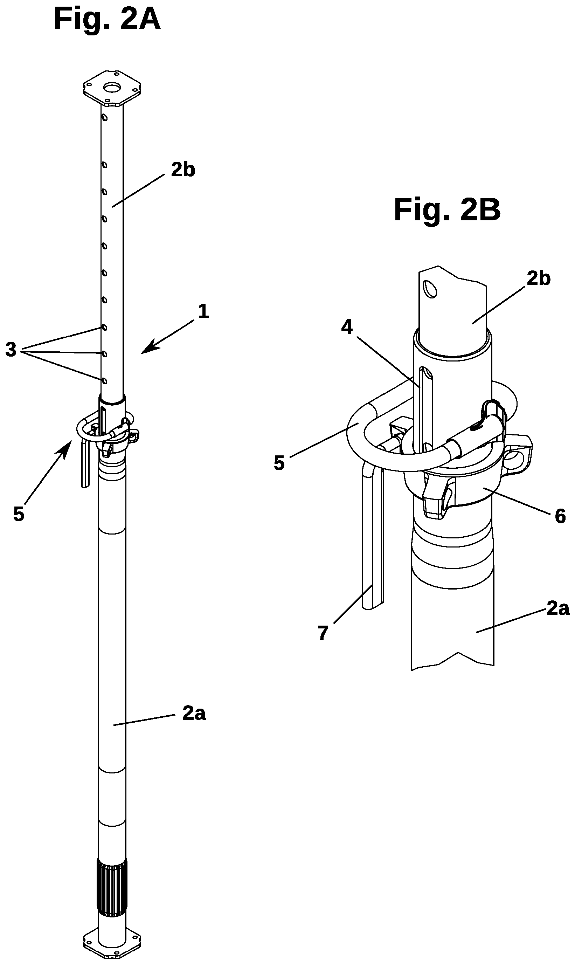

Fig. 2A ist eine Ansicht der teleskopierbaren Stütze aus Fig. 1A, 1B in einer Zwischenstellung des Verriegelungsbolzens, in der eine Feder auf einer Kappe, die über das äußere Ende des Verriegelungsbolzens gestülpt ist, durch die Außenseite des unteren Schenkelteils zusammengedrückt wird.
Fig. 2B ist eine Detailansicht der teleskopierbaren Stütze aus Figur 2A.

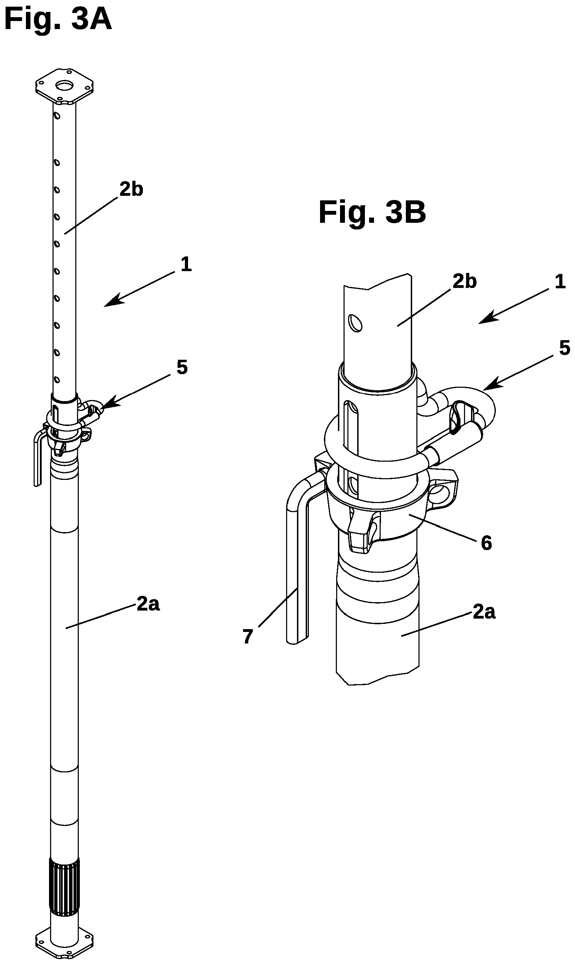

Fig. 3A ist eine Ansicht der teleskopierbaren Stütze aus Fig. 1A, 1B in einer entriegelten oder gelösten Position des Verriegelungsbolzens, die das Ineinanderschieben des oberen Schenkels in Bezug auf den unteren Schenkel ermöglicht.
Fig. 3B ist eine Detailansicht der teleskopierbaren Stütze aus Figur 3A.
Fig. 4A ist eine Ansicht der teleskopierbaren Stütze in einer eingefahrenen Position nach dem Lösen des Verriegelungsbolzens gemäß Fig. 3A, 3B.
Fig. 4B ist eine Detailansicht der teleskopierbaren Stütze aus Figur 4A.
Fig. 5A ist eine Schnittansicht der teleskopierbaren Stütze gemäß Fig. 1A.
Fig. 5B ist eine Schnittansicht der teleskopierbaren Stütze gemäß Figur 2A.
Fig. 5C ist eine Schnittansicht der teleskopierbaren Stütze gemäß Figur 3A.
Fig. 6A bis 6D sind Ansichten einer ersten Ausführungsform der abnehmbaren Kappe des Verriegelungsbolzens, die in der teleskopierbaren Stütze der vorhergehenden Figuren verwendet wird.
Fig. 7A bis 7C sind Ansichten einer zweiten Ausführungsform der abnehmbaren Kappe des Verriegelungsbolzens.
Fig. 8A bis 8D sind Ansichten einer dritten Ausführungsform der abnehmbaren Kappe des Verriegelungsbolzens.
Fig. 9A bis 9D sind Ansichten einer vierten Ausführungsform der abnehmbaren Kappe des Verriegelungsbolzens.
   In den folgenden Figuren werden nicht erfindungsgemäße Ausführungsformen einer teleskopierbaren Stütze näher beschrieben.
Fig. 10A bis 10C sind Schnittansichten einer weiteren Ausführungsform einer teleskopierbaren Stütze.

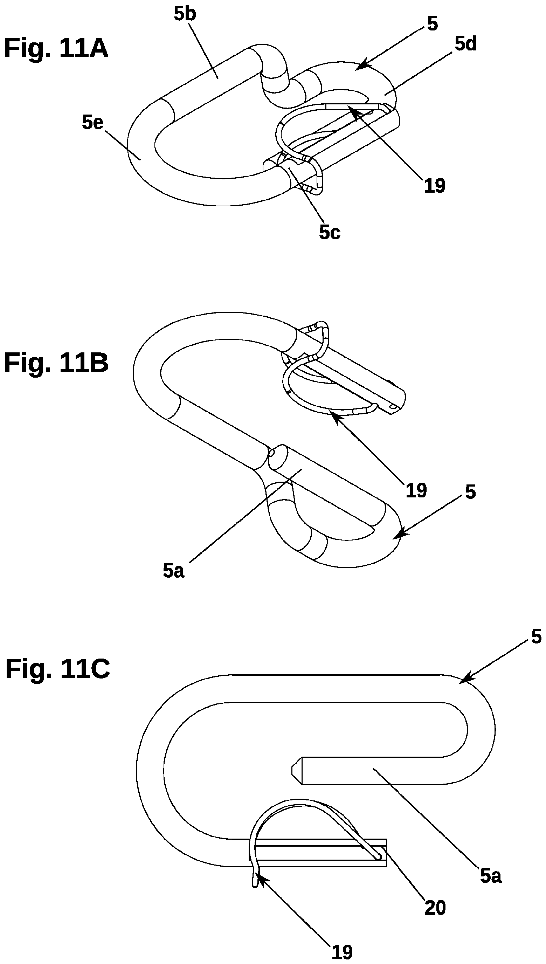

Fig. 11A bis 11C sind Ansichten des Verriegelungsbolzens, der in der Stütze aus Fig. 10A bis 10C verwendet wird.
Fig. 12A und 12B sind Schnittansichten einer weiteren Ausführungsform einer teleskopierbaren Stütze.
Fig. 13A und 13B sind Schnittansichten einer weiteren Ausführungsform einer teleskopierbaren Stütze.
Fig. 14A und 14B sind Schnittansichten einer weiteren Ausführungsform einer teleskopierbaren Stütze.
Fig. 15A und 15B sind Schnittansichten einer weiteren Ausführungsform einer teleskopierbaren Stütze.

Alle Figuren sind in etwa maßstabsgetreu dargestellt.

### DETAILLIERTE BESCHREIBUNG DER ZEICHNUNGEN

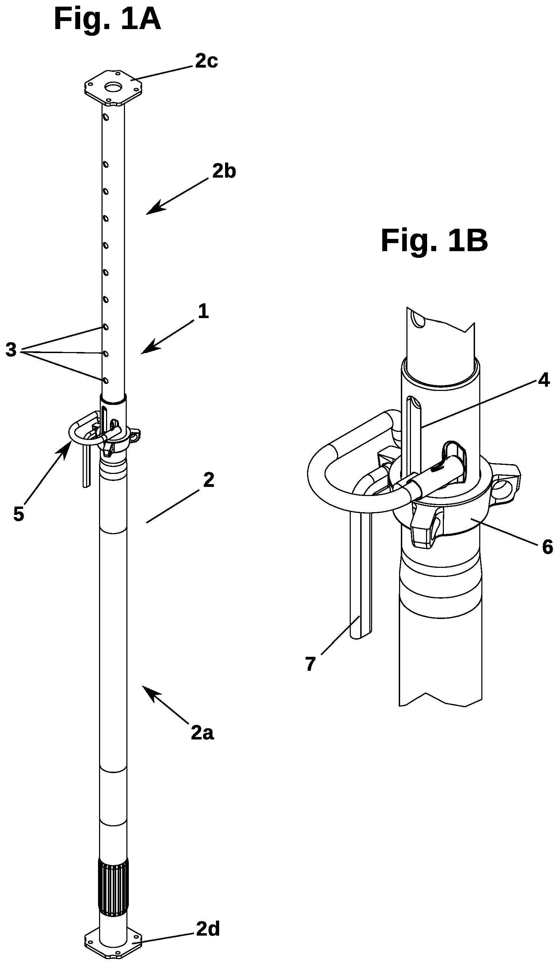

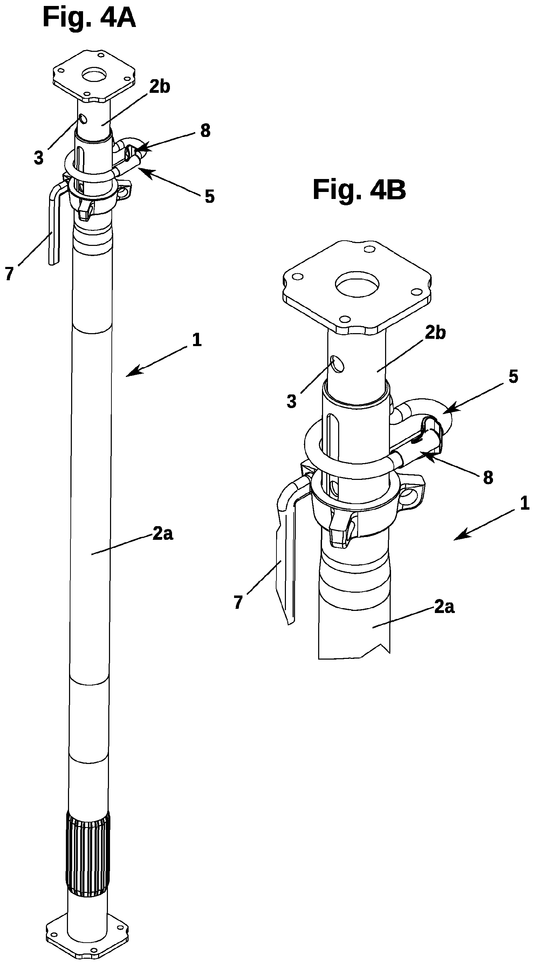

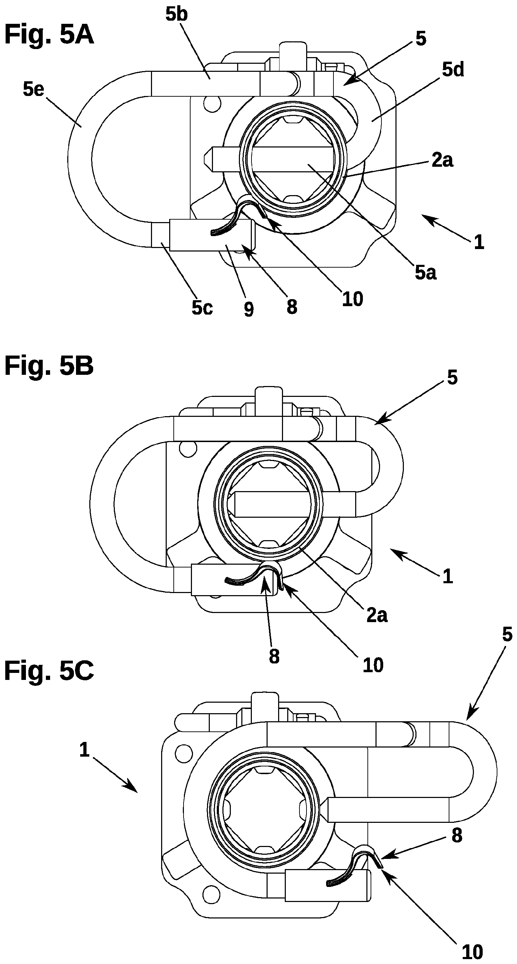

Fig. 1A zeigt eine teleskopierbare Schalungsstütze (oder Stützpfeiler oder Stützpfosten) 1, die in einem Schalungsstützsystem mit Schalungsplatten und/oder Schalungsstützenträgern (nicht gezeigt) verwendet werden soll. Die teleskopierbare Stütze 1 hat einen Schenkel 2 mit einem unteren Schenkelteil 2a und einem oberen Schenkelteil 2b, die zwischen einer ausgefahrenen Position (gezeigt in Fig. 1A) und einer eingefahrenen Position (gezeigt in Fig. 4A) eingestellt werden können. An einem oberen Ende des oberen Schenkelteils 2b ist eine Stützenplatte 2c zum Stützen einer Schalungsplatte und/oder zur Aufnahme von Stützenköpfen angeordnet. Am unteren Ende des unteren Schenkelteils 2a hat die teleskopierbare Stütze 1 ein Fußelement 2d zum Aufliegen auf einem Boden eines im Bau befindlichen Gebäudes (nicht gezeigt). Der obere Schenkelteil 2b hat vertikal beabstandete Paare diametral gegenüberliegender Durchgangslöcher 3. Der untere Schenkelteil 2a hat an seinem oberen Ende zwei diametral gegenüberliegende, sich vertikal erstreckende, längliche Durchgangsöffnungen 4. Ein Verriegelungsbolzen 5, der in der gezeigten Ausführungsform ein Absteckbügel ist, ist lösbar mit einem der vertikal beabstandeten Durchgangslöcher 3 des oberen Schenkelteils 2b verbunden. In der in Fig. 1A gezeigten gesicherten Position steht der Verriegelungsbolzen 5 durch das entsprechende Paar Durchgangslöcher 3 des oberen Schenkelteils 2b und die länglichen Durchgangsöffnungen 4 des unteren Schenkelteils 2a heraus. Die teleskopierbare Stütze 1 hat ferner eine drehbare Manschette 6, die in der gezeigten Ausführungsform eine Einstellmutter ist und mit einer Gewindeaußenseite des unteren Schenkelteils 2a in Eingriff steht. Die drehbare Manschette 6 wird mit einem Griff 7, der in der gezeigten Ausführungsform ein Schlagknebel ist, zur Feineinstellung der vertikalen Position des unteren Schenkelteils 2a, der durch den Verriegelungsbolzen 5 gesichert ist, betätigt. Der Verriegelungsbolzen 5 liegt auf der oberen Seite der drehbaren Manschette 6 auf. Die Länge der sich vertikal erstreckenden länglichen Öffnungen 4 begrenzt die Feineinstellung der vertikalen Position des oberen Schenkelteils 2b. Wie am besten aus Fig. 5A bis 5C ersichtlich, hat der Verriegelungsbolzen 5 einen ersten linearen Abschnitt (Verriegelungsabschnitt) 5a zur Verbindung mit dem entsprechenden Paar Durchgangslöcher 3 der teleskopierbaren Stütze 1, einen zweiten linearen Abschnitt 5b und einen dritten linearen Abschnitt 5c, die sich parallel zu dem ersten linearen Abschnitt 5a an diametral gegenüberliegenden Seiten der teleskopierbaren Stütze 1 erstrecken, entsprechend einen ersten gekrümmten Abschnitt 5d, der den ersten linearen Abschnitt 5a mit dem zweiten linearen Abschnitt 5b verbindet, und einen zweiten gekrümmten Abschnitt (Halteabschnitt) 5e, der den zweiten linearen Abschnitt 5b mit dem dritten linearen Abschnitt 5c verbindet. Der Halteabschnitt 5e ist als U-Bogen ausgebildet.

In der gezeigten Ausführungsform hat die teleskopierbare Stütze 1 ferner eine Kappe 8, die mit dem dritten linearen Abschnitt 5c des Verriegelungsbolzens 5 verbunden ist. Die Verbindung von Kappe 8 mit dem Verriegelungsbolzen 5 kann lösbar oder fest sein. Die Kappe 8, die als Aufsatzteil ausgestaltet ist, hat eine Befestigungshülse 9, die über ein Ende des dritten linearen Abschnittes 5c des Verriegelungsbolzens 5 gestülpt ist und eine Feder 10 zum Anliegen an dem Schenkel 2. Die Befestigungshülse 9 hat eine Einführöffnung 11 an dem einen Ende und eine Vorderwand 12 an dem anderen Ende. Die Einführöffnung 11 ermöglicht die Anordnung von Kappe 8 auf dem Verriegelungsbolzen 5. Die Vorderwand 12 begrenzt die Bewegung von Kappe 8 auf den Verriegelungsbolzen 5. In dem gezeigten Beispiel ist Kappe 8 aus einem Kunststoffwerkstoff hergestellt, wohingegen der Verriegelungsbolzen 5 aus einem Metallwerkstoff hergestellt ist.

Wie am besten aus Fig. 5A bis 5c ersichtlich ist, wirkt die Feder 10 der Verschiebung des Verriegelungsbolzens 5 aus der verriegelten Position (Fig. 5A) durch die Zwischenposition (Fig. 5B) in die gelöste Position (Fig. 5C) entgegen. Zu diesem Zweck wird die Feder 10 durch den Kontakt mit dem unteren Schenkelteil 2a der teleskopierbaren Stütze 1 elastisch ausgelenkt, wenn der Verriegelungsbolzen 5 horizontal bewegt wird, um die Ausziehbewegung der teleskopierbaren Stütze 1 freizugeben.

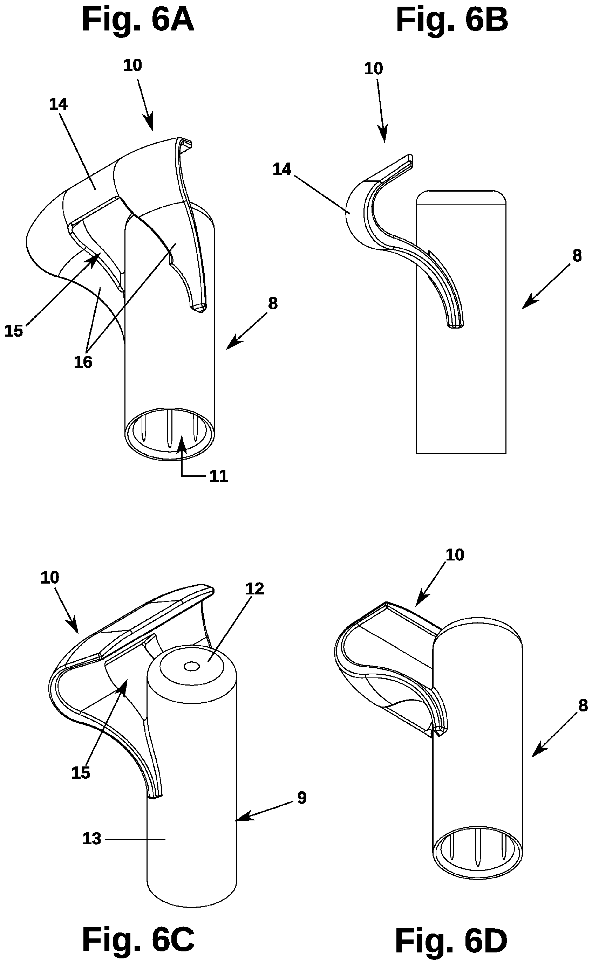

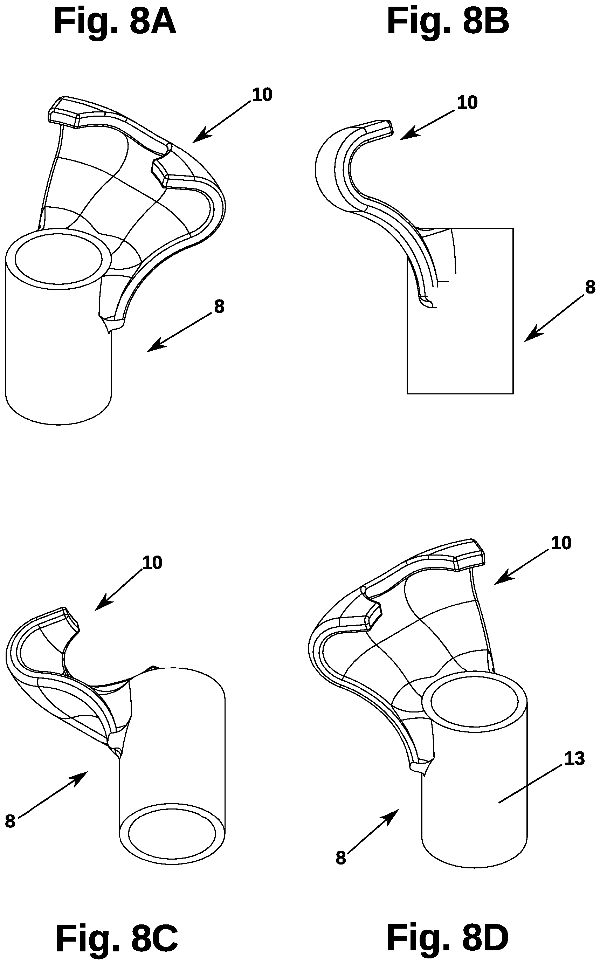

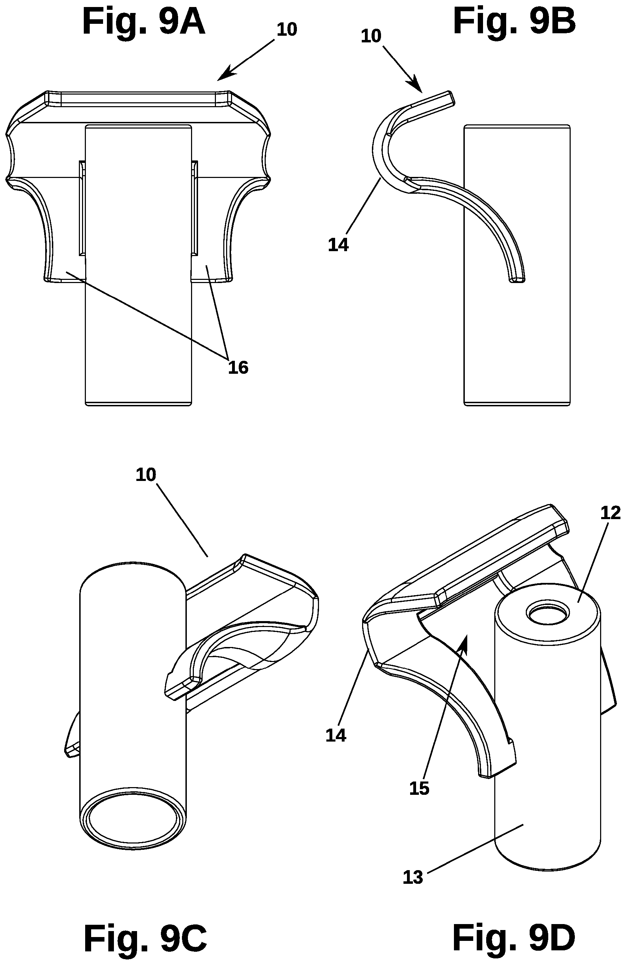

Bei den Ausführungsformen, die in Fig. 6A bis 6D, 8A bis 8D und 9A bis 9D gezeigt sind, steht die Feder 10 frei von einer zylinderförmigen Außenseite 13 der Befestigungshülse 9 von der Kappe 8 vor. Außerdem ist bei diesen Ausführungsformen die Feder 10 eine Flachfeder. Die Feder 10 hat einen gekrümmten Anlagebereich 14 zum Anliegen am unteren Schenkelteil 2a beim Lösen des Verriegelungsbolzens 5. Der gekrümmte Anlagebereich 14 kann in zwei orthogonale Richtungen gekrümmt sein (Fig. 6A bis 6D; Fig. 8A bis 8D). Beispielsweise kann der gekrümmte Anlagebereich 14 kugelförmig sein. Alternativ kann der gekrümmten Anlagebereich 14 zylinderförmig sein (Fig. 9A bis 9D) .

Bei den Ausführungsformen aus Fig. 6A bis 6D, Fig. 8A bis 8D und Fig. 9A bis 9D hat die Feder 10 einen Ausschnitt 15, der in rechtwinkliger Form ausgebildet sein kann. Gemäß Fig. 6A bis 6D und Fig. 9A bis 9D erstreckt sich der Ausschnitt 15 zwischen zwei Flanschen 16, die mit diametral gegenüberliegenden Seiten der Befestigungshülse 9 verbunden sind.

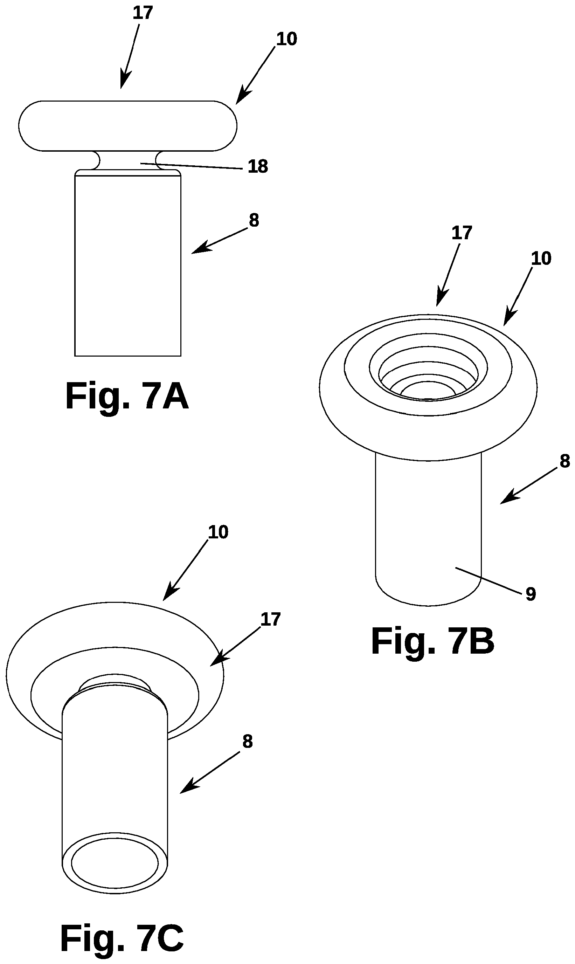

Bei der in Fig. 7A bis 7D gezeigten Ausführungsform ist die Feder 10 mit der Vorderwand 12 der Befestigungshülse 9 verbunden. Hier hat die Feder 10 ein ringförmiges Element 17, dessen Mittelachse mit einer Mittelachse der Befestigungshülse 9 kollinear ist. Ein Biegeabschnitt 18 verbindet das ringförmige Element 17 mit der Befestigungshülse 9.

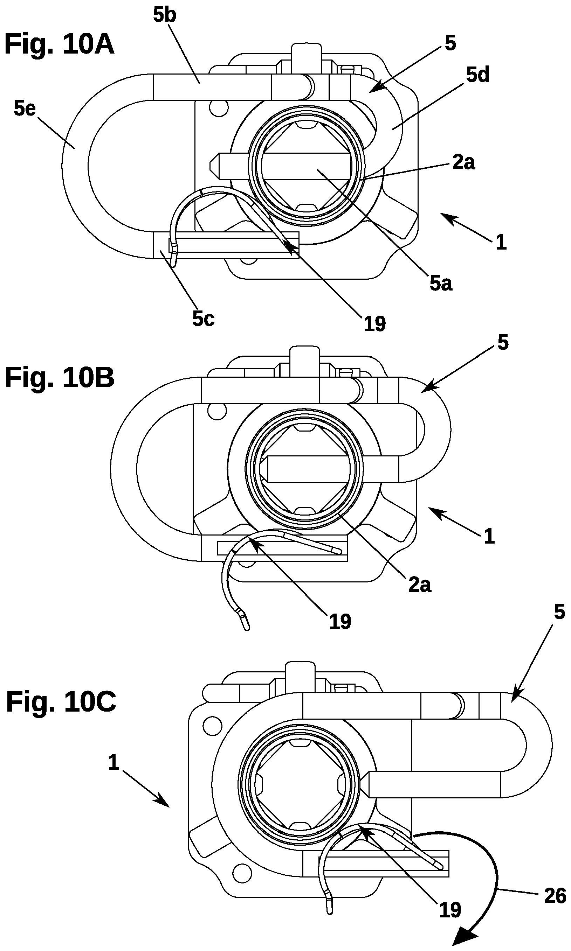

Fig. 10A bis 10C zeigen eine andere Ausführungsform der teleskopierbaren Stütze 1, bei welcher der Verriegelungsbolzen 5 - wie in der vorausgehenden Ausführungsform - einen ersten linearen Abschnitt (Verriegelungsabschnitt) 5a zur Verbindung mit dem entsprechenden Paar Durchgangslöcher 3 der teleskopierbaren Stütze 1, einen zweiten linearen Abschnitt 5b und einen dritten linearen Abschnitt 5c hat, die sich parallel zu dem ersten linearen Abschnitt 5a an diametral gegenüberliegenden Seiten der teleskopierbaren Stütze 1 erstrecken, wobei der erste gekrümmte Abschnitt 5d den ersten linearen Abschnitt 5a mit dem zweiten linearen Abschnitt 5b verbindet und der zweite gekrümmte Abschnitt (Halteabschnitt) 5e, den zweiten linearen Abschnitt 5b mit dem dritten linearen Abschnitt 5c verbindet. Außerdem ist eine Feder 19 gelenkig mit einem Ende 20 des dritten linearen Abschnitts 5c verbunden. Die Feder 19 ist in Draufsicht im Wesentlichen U-förmig. In der gezeigten Ausführungsform ist die Feder 19 ein Draht, der elastisch verformbar sein kann. Wie aus der Ablauffolge in Fig. 10A bis 10C zu sehen ist, wird die Feder 19 von der Außenseite des unteren Schenkelteils 2a in Eingriff gebracht, wenn der Verriegelungsbolzen 5 aus einer verriegelten Position (Fig. 10A) durch eine Zwischenstellung (Fig. 10B) in eine entriegelte Position (Fig. 10C) bewegt wird. Außerdem kann die Feder 19 nach außen zu einem inaktiven Abschnitt (dargestellt durch den Pfeil 26 in Fig. 10C) geschwenkt werden, in dem die Feder 19 beim Entriegeln des Verriegelungsbolzens 5 nicht zusammengedrückt wird.

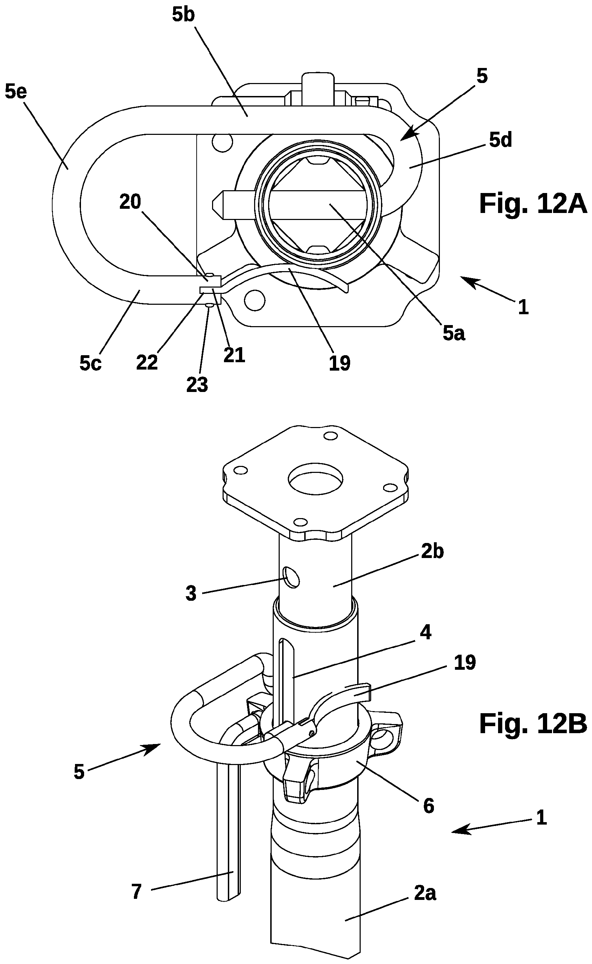

Fig. 12A und 12B zeigen eine weitere Ausführungsform der teleskopierbaren Stütze 1 mit einem Verriegelungsbolzen 5, wobei im Folgenden lediglich die Unterschiede zur vorangehenden Ausführungsform gemäß Fig. 10A bis 10C erläutert werden. Die Feder 19 ist mit einem ersten (freien) Ende 20 des dritten linearen Abschnitts 5c des Verriegelungsbolzens 5 verbunden, wobei sich die Feder 19 im Wesentlichen in Richtung der gedachten Verlängerung des dritten linearen Abschnitts 5c weg vom ersten Ende 20 des dritten linearen Abschnitts 5c nach außen erstreckt. In der gezeigten Ausführungsform gemäß Fig. 12A und 12B weist die Feder 19 ein konvex gekrümmtes Plattenteil auf, das an einem ersten Ende 21 der Feder 19 in eine korrespondierende Ausnehmung 22 des ersten Endes 20 des dritten linearen Abschnitts 5c aufgenommen und mithilfe eines Stiftes 23, der durch eine Bohrung an dem ersten Ende 21 der Feder 19 und durch eine weitere Bohrung an dem ersten Ende 20 des dritten linearen Abschnitts 5c geführt ist, an dem dritten linearen Abschnitt 5c befestigt ist. Wie am besten aus Fig. 12A ersichtlich ist, wirkt die Feder 19 der Verschiebung des Verriegelungsbolzens 5 aus der verriegelten Position (Fig. 12A und 12B) über die Zwischenposition in die gelöste Position (nicht gezeigt) entgegen.

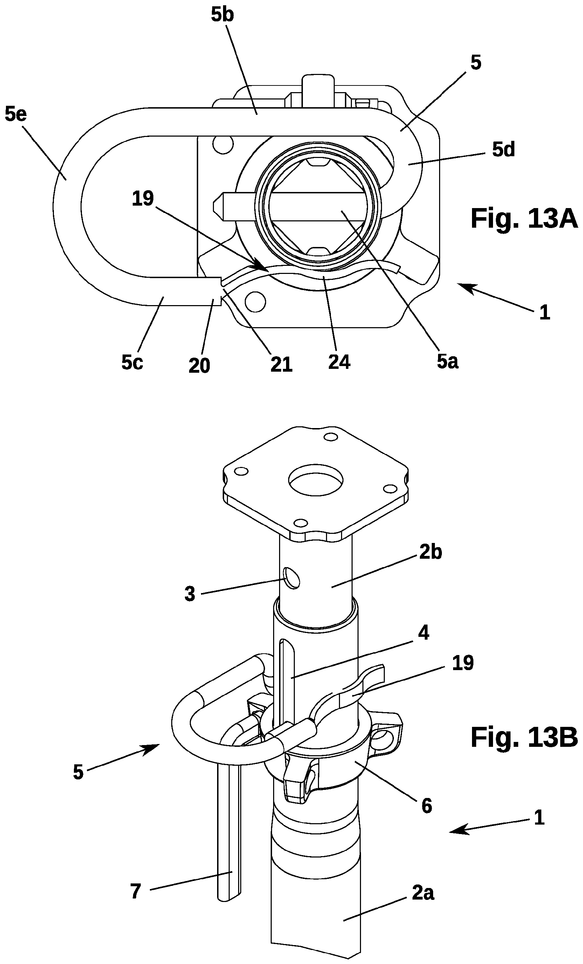

Fig. 13A und 13B zeigen eine weitere Ausführungsform der teleskopierbaren Stütze 1 mit einem Verriegelungsbolzen 5, wobei wiederum nur die Unterschiede zur Ausführungsform gemäß Fig. 10A bis 10C erläutert werden. Die Feder 19 ist mit dem ersten Ende 20 des dritten linearen Abschnitts 5c des Verriegelungsbolzens 5 verbunden, wobei sich die Feder 19 im Wesentlichen in Richtung der gedachten Verlängerung des dritten linearen Abschnitts 5c weg vom ersten Ende 20 des dritten linearen Abschnitts 5c nach außen erstreckt. In der gezeigten Ausführungsform gemäß Fig. 13A und 13B weist die Feder 19 ein gebogenes Plattenteil auf, das an einem ersten Ende 21 der Feder 19 am ersten Ende 20 des dritten linearen Abschnitts 5c befestigt ist. In einem mittleren Abschnitt des gebogenen Plattenteils weist die Feder 19 eine Einbuchtung 24 auf, wobei die Einbuchtung 24 im Querschnitt kreisbogenförmig ausgeführt ist. Das Kreissegment der Einbuchtung 24 weist den selben Radius wie die Außenseite des unteren Schenkelteils 2a auf. Wie am besten aus Fig. 13A ersichtlich ist, wirkt die Feder 19 durch Anliegen der Einbuchtung 24 der Feder 19 an der Außenseite des unteren Schenkels 2a der Verschiebung des Verriegelungsbolzens 5 aus der verriegelten Position (Fig. 13A und 13B) über die Zwischenposition in die gelöste Position (nicht gezeigt) entgegen.

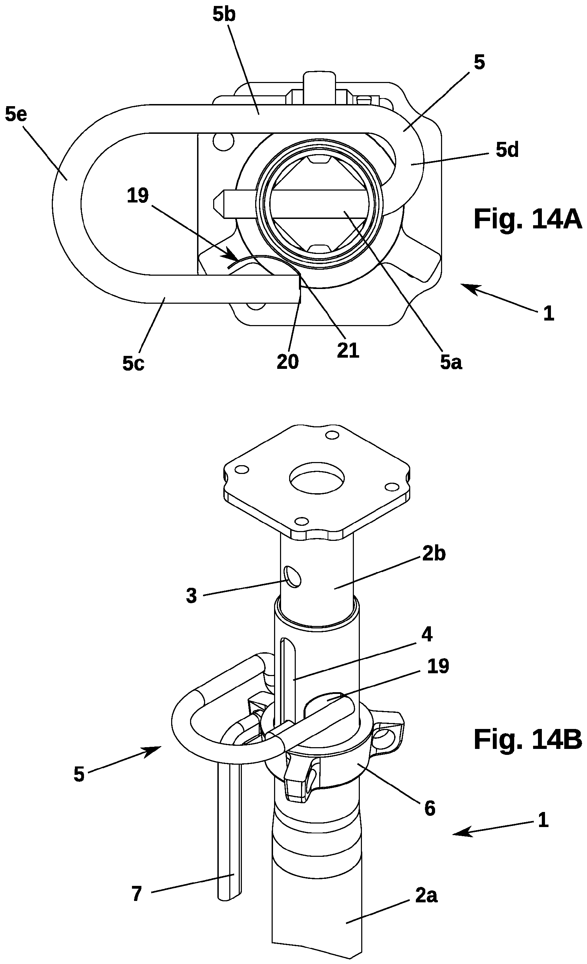

Fig. 14A und 14B zeigen eine weitere Ausführungsform der teleskopierbaren Stütze 1 mit dem Verriegelungsbolzen 5. Die Feder 19 ist mit dem ersten Ende 20 des dritten linearen Abschnitts 5c des Verriegelungsbolzens 5 verbunden, wobei sich die Feder 19 im Wesentlichen entlang des dritten linearen Abschnitts 5c in Richtung des gekrümmten Halteabschnitts 5e (d.h. nach innen) erstreckt, wobei die Feder 19 an einer dem unteren Schenkel 2a zugewandten Seite des dritten linearen Abschnitts 5c angeordnet ist. In der gezeigten Ausführungsform gemäß Fig. 14A und 14B ist die Feder 19 eine elastische gebogene Platte, die an einem ersten Ende 21 der Feder 19 an dem ersten Endes 20 des dritten linearen Abschnitts 5c befestigt ist. Wie am besten aus Fig. 14A ersichtlich ist, wirkt die Feder 19 auch hier der Verschiebung des Verriegelungsbolzens 5 aus der verriegelten Position (Fig. 14A und 14B) durch die Zwischenposition in die gelöste Position (nicht gezeigt) entgegen.

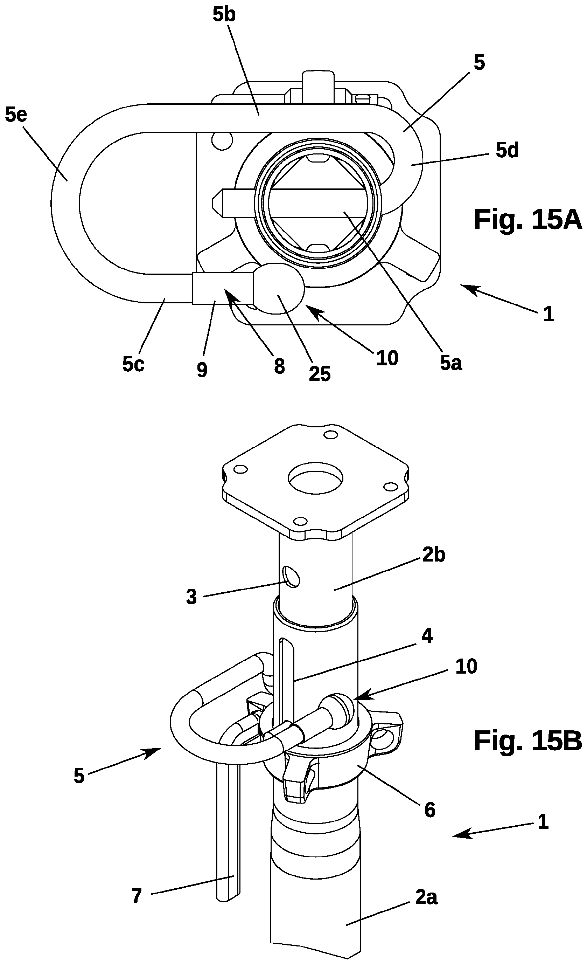

Bei einer weiteren Ausführungsform der teleskopierbaren Stütze 1, die in Fig. 15A und 15B gezeigt ist, ist die Feder 10 an der Vorderseite der Befestigungshülse 9 angeordnet. Hier weist die Feder 10 ein Kugelteil 25 zum Anliegen an dem Schenkel 2 auf.

## Patentansprüche

1. Teleskopierbare Stütze (1), die Folgendes aufweist:
- einen Schenkel (2) mit einem unteren Schenkelteil (2a) und einem oberen Schenkelteil (2b), wobei der obere Schenkelteil (2b) mehrere vertikal beabstandete Durchgangslöcher (3) aufweist, und
- einen Verriegelungsbolzen (5) aufweisend einen Bolzen, der lösbar mit einem der vertikal beabstandeten Durchgangslöcher (3) des oberen Schenkelteils (2b) verbunden ist,
**dadurch gekennzeichnet, dass** der Verriegelungsbolzen (5) eine Kappe (8) aufweist, die mit dem Verriegelungsbolzen (5) verbunden ist, wobei die Kappe (8) eine Befestigungshülse (9) aufweist, die über ein Ende des Verriegelungsbolzens (5) gestülpt ist, wobei die Kappe (8) ferner eine Feder (10) zum Betätigen durch die Außenseite des unteren Schenkelteils (2a) aufweist.

2. Teleskopierbare Stütze (1) nach Anspruch 1, **dadurch gekennzeichnet, dass** die Befestigungshülse (9) eine Einführöffnung (11) an dem einen Ende und eine Vorderwand (12) an dem anderen Ende aufweist.

3. Teleskopierbare Stütze (1) nach Anspruch 1 oder 2, **dadurch gekennzeichnet, dass** die Kappe (8) aus einem Kunststoffwerkstoff hergestellt ist und der Verriegelungsbolzen (5) aus einem Metallwerkstoff hergestellt ist.

4. Teleskopierbare Stütze (1) nach einem der Ansprüche 1 bis 3, **dadurch gekennzeichnet, dass** die Feder (10) eine Flachfeder ist.

5. Teleskopierbare Stütze (1) nach einem der Ansprüche 1 bis 4, **dadurch gekennzeichnet, dass** die Feder (10) einen gekrümmten Anlagebereich (14) zum Anlegen an den Schenkel (2) aufweist.

6. Teleskopierbare Stütze (1) nach einem der Ansprüche 1 bis 5, **dadurch gekennzeichnet, dass** die Feder (10) einen Ausschnitt (15) aufweist.

7. Teleskopierbare Stütze (1) nach Anspruch 2 oder 3, **dadurch gekennzeichnet, dass** die Feder (10) mit der Vorderwand (12) der Befestigungshülse (9) verbunden ist

8. Teleskopierbare Stütze (1) nach Anspruch 7, **dadurch gekennzeichnet, dass** die Feder (10) ein ringförmiges Element (17) aufweist.

9. Teleskopierbare Stütze (1) nach einem der Ansprüche 1 bis 3, **dadurch gekennzeichnet, dass** die Feder (10) ein Kugelteil (25) aufweist.

10. Verriegelungsbolzen (5) zum Sichern eines oberen Schenkelteils (2b) an einem unteren Schenkelteil (2a) eines Schenkels (2) einer teleskopierbaren Stütze (1), der Folgendes aufweist:
- einen Bolzen zur Verbindung mit einem Durchgangsloch der teleskopierbaren Stütze (1),
**dadurch gekennzeichnet, dass** der Verriegelungsbolzen (5) eine Kappe (8) aufweist, die mit dem Bolzen verbunden ist, wobei die Kappe (8) eine Befestigungshülse (9) aufweist, die über ein Ende des Bolzens gestülpt ist, wobei die Kappe (8) ferner eine Feder (10) zum Anliegen an dem Schenkel (2) aufweist.

## Claims

1. Telescopic support (1), comprising:
- a leg (2) having a lower leg part (2a) and an upper leg part (2b), the upper leg part (2b) having a plurality of vertically spaced through holes (3), and
- a locking pin (5) having a bolt, which is releasably connected to one of the vertically spaced through holes (3) of the upper leg part (2b),
**characterized in that** the locking pin (5) has a cap (8) which is connected to the locking pin (5), the cap (8) having a fastening sleeve (9) which is pulled over one end of the locking pin (5), the cap (8) further comprising a spring (10) for actuating through the outside of the lower leg part (2a).

2. Telescopic support (1) according to claim 1, **characterized in that** the fastening sleeve (9) has an insertion opening (11) at one end and a front wall (12) at the other end.

3. Telescopic support (1) according to either claim 1 or claim 2,
**characterized in that** the cap (8) is made of a plastics material and the locking pin (5) is made of a metal material.

4. Telescopic support (1) according to any of claims 1 to 3,
**characterized in that** the spring (10) is a flat spring.

5. Telescopic support (1) according to any of claims 1 to 4,
**characterized in that** the spring (10) has a curved contact region (14) for resting against the leg (2).

6. Telescopic support (1) according to any of claims 1 to 5,
**characterized in that** the spring (10) has a cutout portion (15).

7. Telescopic support (1) according to either claim 2 or claim 3,
**characterized in that** the spring (10) is connected to the front wall (12) of the fastening sleeve (9)

8. Telescopic support (1) according to claim 7, **characterized in that** the spring (10) has an annular element (17).

9. Telescopic support (1) according to any of claims 1 to 3,
**characterized in that** the spring (10) has a ball portion (25).

10. Locking pin (5) for securing an upper leg part (2b) to a lower leg part (2a) of a leg (2) of a telescopic support (1), comprising:
- a bolt for connection to a through hole of the telescopic support (1),
**characterized in that** the locking pin (5) has a cap (8) which is connected to the bolt, the cap (8) having a fastening sleeve (9) which is pulled over one end of the bolt, the cap (8) further having a spring (10) for resting against the leg (2).

## Revendications

1. Support télescopique (1) qui comprend ce qui suit :
- une branche (2) avec une partie de branche inférieure (2a) et une partie de branche supérieure (2b), dans lequel la partie de branche supérieure (2b) comprend plusieurs trous de passage (3) distants verticalement et
- une tige de verrouillage (5) comprenant une tige, qui est reliée de manière amovible avec un des trous de passage (3) distants verticalement de la partie de branche supérieure (2b),
**caractérisé en ce que** la tige de verrouillage (5) comprend un capuchon (8) qui est relié avec la tige de verrouillage (5), dans lequel le capuchon (8) comprend un manchon de fixation (9) qui est embouti au-dessus d'une extrémité de la tige de verrouillage (5), dans lequel le capuchon (8) comprend en outre un ressort (10) destiné à être actionné par la face externe de la partie de branche inférieure (2a).

2. Support télescopique (1) selon la revendication 1, **caractérisé en ce que** le manchon de fixation (9) présente une ouverture d'introduction (11) à une extrémité et une paroi avant (12) à l'autre extrémité.

3. Support télescopique (1) selon la revendication 1 ou 2, **caractérisé en ce que** le capuchon (8) est constitué d'une matière plastique et la tige de verrouillage (5) est constituée d'un matériau métallique.

4. Support télescopique (1) selon l'une des revendications 1 à 3, **caractérisé en ce que** le ressort (10) est un ressort plat.

5. Support télescopique (1) selon l'une des revendications 1 à 4, **caractérisé en ce que** le ressort (10) présente une partie d'appui (14) pour l'appui contre la branche (2).

6. Support télescopique (1) selon l'une des revendications 1 à 5, **caractérisé en ce que** le ressort (10) présente une découpe (15).

7. Support télescopique (1) selon la revendication 2 ou 3, **caractérisé en ce que** le ressort (10) est relié avec la paroi avant (12) du manchon de fixation (9).

8. Support télescopique (1) selon la revendication 7, **caractérisé en ce que** le ressort (10) comprend un élément annulaire (17).

9. Support télescopique (1) selon l'une des revendications 1 à 3, **caractérisé en ce que** le ressort (10) comprend une pièce sphérique (25).

10. Tige de verrouillage (5) pour la fixation d'une partie de branche supérieure (2b) sur une partie de branche inférieure (2a) d'une branche (2) d'un support télescopique (1), qui comprend ce qui suit :
- une tige pour le raccordement avec un trou de passage du support télescopique (1),
**caractérisé en ce que** la tige de verrouillage (5) comprend un capuchon (8) qui est relié avec la tige, dans lequel le capuchon (8) comprend un manchon de fixation (9) qui est embouti au-dessus d'une extrémité de la tige, dans lequel le capuchon (8) comprend en outre un ressort (10) destiné à s'appuyer contre la branche (2).
